# EUROPÄISCHE PATENTSCHRIFT

(11) **EP 2 102 463 B1**
(45) Veröffentlichungstag und Bekanntmachung des Hinweises auf die Patenterteilung: **28.08.2013**
(21) Anmeldenummer: 07818901.6
(22) Anmeldetag: 11.10.2007
(51) Int. Cl.: F01N 3/20, B01F 5/06, B01F 5/04, B01F 3/02

(54) **VORRICHTUNG ZUM VERMISCHEN VON ABGASEN AUS VERBRENNUNGSMOTOREN MIT ZUSATZSTOFFEN**
DEVICE FOR MIXING EXHAUST GASES FROM INTERNAL COMBUSTION ENGINES WITH ADDITIVES
DISPOSITIF POUR MÉLANGER DES ADDITIFS AVEC LES GAZ D'ÉCHAPPEMENT DE MOTEURS À COMBUSTION INTERNE

(30) Priorität: 24.11.2006 DE 202006017848 U
(43) Veröffentlichungstag der Anmeldung: 23.09.2009
(73) Patentinhaber: Tenneco GmbH, 67840 Edenkoben (DE)
(72) Erfinder: SCHELB, Dietmar, 76744 Wörth am Rhein (DE); LANG, Andreas, 67454 Hassloch (DE)
(74) Vertreter: Thews, Karl
(86) Internationale Anmeldenummer: PCT/EP2007/008830
(87) Internationale Veröffentlichungsnummer: WO 2008/061593

(56) Entgegenhaltungen:
- EP-A- 0 526 393
- EP-A- 1 712 751
- US-B1- 6 623 155

## Beschreibung

Die Erfindung betrifft Vorrichtungen zum Vermischen von Abgasen aus Verbrennungsmotoren mit in den Abgasstrom eingedüsten Zusatzstoffen, umfassend
- ein Rohr
- im Rohr eine Düse für den Zusatzstoff,
- im Rohr eine Flügeleinheit, umfassend eine Anzahl von abwechselnd nach oben und nach unten angestellten Flügeln, wobei
- die Flügel der Flügeleinheit spiegelsymmetrisch zu einer Rohrmittelebene angestellt sind.

Statische Mischer mit Flügeleinheiten sind z.B. aus US 6 623 155 und EP 0526393 bekannt.

Zur Verringerung der schädlichen Emissionen werden in Abgäsanlagen von Kraftfahrzeugen in den heißen Abgasstrom Zusatzstoffe eingebracht, die auf chemischem oder katalytischem Wege die Abgasreinigung teils verbessern, teils erst möglich machen. Ein Beispiel ist die Eindüsung von Harnstoff, der im heißen Abgas in Ammoniak umgewandelt wird und so die Reduktion der Stickoxide ermöglicht. Je nach System werden die Zusatzstoffe in flüssiger oder auch fester Form zugegeben.

Es versteht sich, dass die chemischen Reaktionen der Zusatzstoffe mit den Abgasgasen umso schneller und umso vollständiger erfolgen, je besser die Durchmischung ist. Dieser Anforderung werden die aktuellen Anlagen nicht gerecht, da die in den Abgasrchren strömenden Abgase die Ausbildung laminarer Strömungen fördern. In laminaren Strömungen findet jedoch nur ein minimaler Stoffaustausch quer zur Strömungsrichtung statt.

Der vorliegenden Erfindung liegt die Aufgabe zugrunde, eine einfache und preiswerte Vorrichtung anzugeben, die die Durchmischung von Abgasen und Zusatzstoffen fördert.

Diese Aufgabe wird gelöst durch gattungsgemäße Vorrichtungen mit folgenden erfindungsgemäßen Merkmalen:
- im Rohr (1) sind mehrere abwechselnd angestellte Flügeleinheiten (3, 4) hintereinander sowie neben- und/oder übereinander positioniert,
- die wandseitigen Flügel (3.1, 3.3) der Flügeleinheit (3, 4) sind der Rohrwand folgend um die Rohrlängsachse gedreht.

Wesentlicher Vorteil der erfindungsgemäßen Vorrichtung ist ihre Einfachheit, ihre kurze Baulänge, ihre nachgewiesenermaßen gute Mischwirkung, der niedrige Druckverlust und das Fehlen jeglicher Verstopfungsgefahr.

Ein weiterer wesentlicher Vorteil ist, dass die Flügel zu einer Mittelebene des Rohrs spiegelsymmetrisch abgewinkelt sind. Dadurch wird die Bildung eines einzigen großen, die Abgasströmung stabilisierenden Dralls verhindert, der die Mischwirkung behindern könnte. Vielmehr wird die Strömung in der Mitte ausgelenkt und rollt sich im weiteren Verlauf in mehreren Teilwirbeln auf. Dieses Aufrollen der Teilwirbel wird durch das Drehen der wandseitigen Flügel zusätzlich unterstützt.

Weitere Vorteile der erfindungsgemäßen Vorrichtung sind ihre Skalierbarkeit zwecks Optimierung der Mischwirkung und Minimierung des Druckverlustes. Schließlich ist die erfindungsgemäße Vorrichtung auch parametrisierbar durch veränderte Stellung der Flügelblätter und durch Anpassung an die aktuelle Einbausituation.

Dank der hervorragenden Mischwirkung kann die Länge des Mischrohrs, in dem die erfindungsgemäßen Flügel die Mischung der Abgaskomponenten verbessern, gegenüber den derzeitigen Mischstrecken deutlich verkürzt werden.

Gemäß der Erfindung sind mehrere Flügeleinheiten hintereinander im Abgasstrom positioniert. Dies fördert zusätzlich die Wirbelbildung und damit die Vermischung der Abgaskomponenten.

Gemäß einer Ausgestaltung der Erfindung sind die Flügeleinheiten vor und/oder hinter der Düse positioniert. Ist eine Flügeleinheit bereits vor der Düse positioniert, so werden die Zusatzstoffe in die bereits verwirbelten Abgase eingedüst und können sich so sehr schnell verteilen.

Gemäß einer vorteilhaften Weiterbildung der Erfindung sind die Enden der Flügel strukturiert, entweder gewellt oder eingeschnitten. Auch diese Maßnahme dient dazu, die Wirbelbildung zu verbessern, ohne den Druckverlust allzu sehr zu erhöhen.

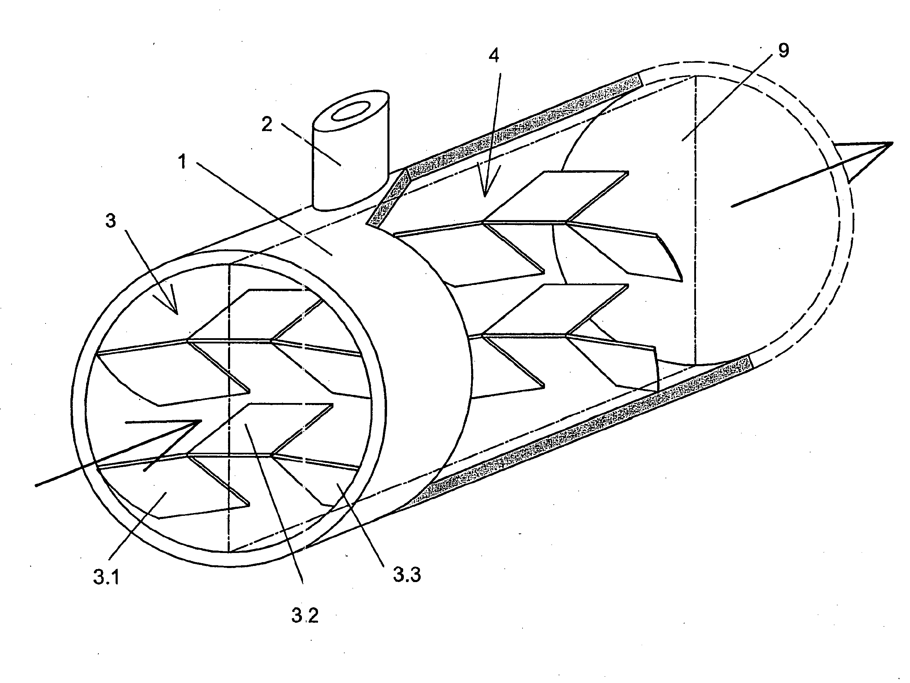

### Kurze Beschreibung der Zeichnung:

Anhand der Zeichnung soll die Erfindung in Form des Ausführungsbeispiels näher erläutert werden.

Die Figur zeigt in isometrischer Darstellung einen Ausschnitt aus einem abgasführenden Rohr 1, in das eine Düse 2 eingesetzt ist, durch die Zusatzstoffe, beispielsweise Harnstoff oder auch Kohlenwasserstoffe, in den Abgasstrom eingedüst werden. Zur Verbesserung der Durchmischung der das Rohr 1 durchströmenden Abgase mit den durch die Düse 2 eingedüsten Zusatzstoffen sind bezogen auf die Abgasströmung vor der Düse 2 eine erste Flügeleinheit 3, hinter der Düse 2 eine zweite Flügeleinheit 4 positioniert. Die Flügeleinheiten 3, 4 bestehen aus Flügeln 3.1, 3.2, 3.3, die bezogen auf die Abgasströmung abwechselnd nach oben und nach unten angestellt sind. Die Flügeleinheiten 3, 4 sind außerdem symmetrisch zu einer Mittelebene 9, die durch die Düse 2 gedacht werden kann, spiegelsymmetrisch ausgebildet, so dass kein großer die Abgasströmung stabilisierender und die Durchmischung verringernder Drall entsteht.

Zur weiteren Verringerung der Drallbildung und zur weiteren Verbesserung der Durchmischung sind die der Rohrwand benachbarten Flügel 3.1, 3.3 um die Längsachse des Rohrs 1 so gedreht, dass sie der Rohrwand folgend auch die an der Rohrwand anliegenden Strömungsfäden erfassen und verwirbeln.

## Patentansprüche

1. Vorrichtung zum Vermischen von Abgasen aus Verbrennungsmotoren mit in den Abgasstrom eingedüsten Zusatzstoffen, umfassend
- ein Rohr (1)
- im Rohr (1) eine Düse (2) für den Zusatzstoff,
- im Rohr (1) eine Flügeleinheit (3, 4), umfassend eine Anzahl von abwechselnd nach oben und nach unten angestellten Flügeln (3.1, 3.2, 3.3),
- die Flügel (3.1, 3.2, 3.3) der Flügeleinheit (3, 4) sind spiegelsymmetrisch zu einer Rohrmittelebene (9) angestellt
**gekennzeichnet durch** die Merkmale:
- im Rohr (1) sind mehrere abwechselnd angestellte Flügeleinheiten (3, 4) hintereinander sowie neben- und/oder übereinander positioniert,
- die wandseitigen Flügel (3.1, 3,3) der Flügeleinheit (3, 4) sind der Rohrwand folgend um die Rohrlängsachse gedreht.

2. Vorrichtung nach Anspruch 1, **gekennzeichnet durch** das Merkmal:
- die Flügeleinheiten (3, 4) sind vor und/oder hinter der Düse (2) positioniert.

3. Vorrichtung nach Anspruch 1 oder 2, **gekennzeichnet durch** das Merkmal:
- die Enden der Flügeleinheiten (3, 4) sind strukturiert.

## Claims

1. A device for mixing exhaust gases from internal combustion engines with additives injected into the exhaust gas flow, comprising
- a pipe (1)
- in the pipe (1), a nozzle (2) for the additive,
- in the pipe (1), a blade unit (3, 4) comprising a number of blades adjusted alternately upward and downward (3.1, 3.2, 3.3),
- the blades (3.1, 3.2, 3.3) of the blade unit (3, 4) are adjusted mirror-symmetrically with respect to a central plane (9) of the pipe,
**characterized by** the features:
- in the pipe (1), several alternately adjusted blade units (3, 4) are positioned one behind the other as well as next to and/or on top of one another,
- the wall-side blades (3.1, 3.3) of the blade unit (3, 4) are turned around the longitudinal pipe axis following the pipe wall.

2. A device according to claim 1, **characterized by** the feature:
- the blade units (3, 4) are positioned upstream and/or downstream of the nozzle (2).

3. A device according to claim 1 or 2, **characterized by** the feature:
- the ends of the blade unit (3, 4) are structured.

## Revendications

1. Dispositif pour mélanger des gaz d'échappement provenant des moteurs à combustion interne avec des additifs injectés dans le flux de gaz d'échappement, comprenant
- un tuyau (1)
- dans le tuyau (1), une tuyère (2) pour l'additif,
- dans le tuyau (1), une unité à ailettes (3, 4) comprenant un nombre d'ailettes ajustées en alternance vers le haut et vers le bas (3.1, 3.2, 3.3),
- les ailettes (3.1, 3.2, 3.3) de l'unité à ailettes (3, 4) sont ajustées en symétrie de miroir par rapport à un plan central (9) du tuyau,
**caractérisé par** les caractéristiques :
- dans le tuyau (1), plusieurs unités à ailettes (3, 4) ajustées en alternance sont positionnées l'une derrière l'autre ainsi que l'une à côté et/ou au-dessus de l'autre,
- les ailettes (3.1, 3.3) de l'unité à ailettes (3, 4) se trouvant du côté de la paroi sont tournées autour de l'axe longitudinal du tuyau suivant la paroi du tuyau.

2. Dispositif selon la revendication 1, **caractérisé par** le caractéristique :
- les unités à ailettes (3, 4) sont positionnées en amont et/ou en aval de la tuyère (2).

3. Dispositif selon la revendication 1 ou 2, **caractérisé par** le caractéristique :
- les extrémités de l'unité à ailettes (3, 4) sont structurées.
